# EUROPÄISCHE PATENTSCHRIFT

(11) **EP 2 953 275 B1**
(45) Veröffentlichungstag und Bekanntmachung des Hinweises auf die Patenterteilung: **09.08.2017**
(21) Anmeldenummer: 15001516.2
(22) Anmeldetag: 20.05.2015
(51) Int. Cl.: H04B 7/155, H04Q 9/00, H04W 84/04

(54) **FUNKÜBERTRAGUNGSSYSTEM FÜR DATEN IN LOKALISIERTEN SYSTEMEN UND VERFAHREN ZU SEINEM BETRIEB**
WIRELESS TRANSMISSION SYSTEM FOR DATA IN LOCALIZED SYSTEMS AND METHOD OF OPERATING THE SAME
SYSTÈME DE TRANSMISSION PAR RADIO DE DONNÉES DANS DES SYSTÈMES LOCALISÉS ET SON PROCÉDÉ DE FONCTIONNEMENT

(30) Priorität: 05.06.2014 DE 102014008255
(43) Veröffentlichungstag der Anmeldung: 09.12.2015
(73) Patentinhaber: Diehl Metering Systems GmbH, 90451 Nürnberg (DE)
(72) Erfinder: Pokorny, Harald, DE - 90562 Heroldsberg (DE)
(74) Vertreter: Diehl Patentabteilung

(56) Entgegenhaltungen:
- US-A1- 2012 327 792
- TATIANA G BONIFACIO ET AL: "Geographic routing algorithm implementation using simple MAC 802.15.4", INDUSTRIAL ELECTRONICS (ISIE), 2011 IEEE INTERNATIONAL SYMPOSIUM ON, IEEE, 27. Juni 2011 (2011-06-27), Seiten 1212-1217, XP032019230, DOI: 10.1109/ISIE.2011.5984331 ISBN: 978-1-4244-9310-4
- MAUVE M ET AL: "A survey on position-based routing in mobile ad hoc networks", IEEE NETWORK, IEEE SERVICE CENTER, NEW YORK, NY, US, Bd. 15, Nr. 6, 1. November 2001 (2001-11-01), Seiten 30-39, XP011474047, ISSN: 0890-8044, DOI: 10.1109/65.967595

## Beschreibung

Die Erfindung betrifft ein Verfahren zur Übertragung von Datentelegrammen und ein Funkdatenübertragungssystem gemäß den Oberbegriffen der unabhängigen Patentansprüche.

Ein derartiges System und sein Betrieb sind etwa in der EP 2 192 706 B1 beschrieben. Bei den Daten handelt es sich insbesondere um Verbrauchs-Messwerte aus Wohn- oder Arbeitsbereichen, die in, an unterschiedlichen Orten positionierten, Messstationen von deren Messgeräten quasi-kontinuierlich erfasst und als digitale Datentelegramme über Funkstrecken an einen Speicher übermittelt werden. Zum Überbrücken größerer Reichweiten sind dort, zusätzlich zu den Messstationen, spezielle Relaisstationen vorgesehen, mit denen die Messstationen über umschaltbarer Funkkanäle kommunizieren. Im Funkverkehr zwischen Messstationen und Relaisstationen findet ein Kanalwechsel statt, wenn in einem bisher benutzten Funkkanal die Übertragungsqualität kritisch nachlässt. Um das festzustellen, erfolgen in jeder Relaisstation Empfangspegelmessungen, die, nach einem Zähleinrichtungs-Überlauf für das Auftreten eines bestimmten Pegels, eine Autokorrelation samt Wahrscheinlichkeitsberechnung für eine Aussage über die künftig zu erwartende Qualität des aktuell benutzten Funkkanales, und erforderlichenfalls den Kanalwechsel, auslösen. Die Relaisstationen sind per Funk mit einer Schnittstelle verbunden, hinter welcher die Weiterleitung der Daten per Draht an einen Zentralspeicher erfolgt, wo die Verbrauchsdaten saldiert und wenigstens bis zur Verbrauchsabrechnung am Ende eines Abrechnungszeitraumes bereitgehalten werden. Einrichtung und Betrieb der Funkstrecken über solche zusätzlich zu den Messstationen bereitzustellenden Relaisstationen mit von der vorausberechneten Übertragungsqualität abhängigem Umschalten zwischen verschiedenen verfügbar zu haltenden Funkkanälen und letztendlichem Übergang auf Drahtübertragung zum Zentralspeicher bedingen allerdings einen ganz erheblichen Installations- und Betriebsaufwand mit entsprechend hohem Kapitalbedarf, der sich für Verbrauchswert-Erfassungen und -Abrechnungen, insbesondere in großflächigen dünnbesiedelten Landschaftsbereichen, betriebswirtschaftlich kaum rechtfertigen lässt.

Die US 2012/0327792 A1 offenbart ein kabelloses Netzwerk intelligenter Messstationen, welches aus Messstations-Knoten und Datenkonzentrator-Knoten besteht. Die Datenkonzentrator-Knoten senden Datenpakete mit möglichen Datenrouten durch das gesamte Netzwerk, so dass jeder Messstations-Knoten Daten-Routen zu jedem Datenkonzentrator entnehmen kann.

Aus der US 5,115,433 A ist eine Weiterleitungsmethode für Datenpakete in einem Netzwerk bekannt, welches auf den geografischen Koordinaten der Netzwerkknoten beruht. Dabei entscheidet jeder Netzwerkknoten aufgrund seiner Kenntnis über die geografischen Daten seiner Nachbar-Knoten darüber, an welchen der Nachbar-Knoten er ein an ein bestimmtes Ziel adressiertes Datenpaket am vorteilhaftesten weiterleitet. Das weiterzuleitende Datenpaket wird dann mit der Adresse des ausgewählten Nachbar-Knoten versehen und an diesen weitergeleitet, der wiederum entscheidet, an welchen seiner Nachbar-Knoten er das Datenpaket am besten weiterleitet.

Ähnliche Routing-Methoden werden auch in Bonifacio, Pantoni, Brandäo: "Geographic Routing Algorithm Implementation Using Simple MAC 802.15.4", 2011 IEEE International Symposium on Industrial Electronics (ISIE), 27.06.2011, Seiten 1212 bis 1217 sowie in Mauve, Widmer, Hartenstein: "A Survey on Position-Based Routing in Mobile Ad Hoc Networks", IEEE Network, IEEE Service Center, New York, Band 15, Nr. 6, 01.11.2001, Seiten 30 bis 39 beschrieben.

In Erkenntnis solcher Gegebenheiten liegt vorliegender Erfindung die technische Problemstellung zugrunde, die Funkübertragungsreichweite für insbesondere Verbrauchs-Messwerte, wie für den Verbrauch von Warmwasser oder von Haushaltsgas, ohne den Zusatzaufwand für den Betrieb gesonderter Relaisstationen zu steigern.

Diese Aufgabe ist erfindungsgemäß durch die im Hauptanspruch angegebenen wesentlichen Merkmale gelöst. Danach ist wenigstens ein Teil der an räumlich verstreuten Standorten jeweils ortsfest betriebenen, lokalen Messstationen mit einem Transceiver zu wahlweisem ungerichtetem Senden und Empfangen von Datentelegrammen mit Verbrauchs-Messwerten ausgestattet; sowie zusätzlich mit Speichern für die geographischen Standort-Koordinaten dieser Datentelegramme aussendenden Messstationen. Außerdem weisen die mit einem Transceiver ausgestatteten Messstationen einen hier so genannten Koordinatenvergleicher für eine Entscheidung über einen eventuellen Weiterversand von nicht selbst generierten, sondern von anderen der unsynchronisiert und jeweils ungerichtet sendenden Messstationen empfangenen Datentelegrammen auf; sowie gegebenenfalls eine Intensitätsmesseinrichtung zur Beurteilung der Stärke jenes von einer der anderen Messstationen gerade empfangenen und unter Umständen mittels einer Blockierschaltung zu verwerfenden oder aber nun wieder auszusendenden Datentelegrammes - ohne für diese Entscheidung auf die Funktion des Koordinatenvergleichers zurückgreifen zu müssen. Außerdem kann in der mit dem Transceiver ausgestatteten Messstation eine Zähleinrichtung vorgesehen sein, die über die Blockiereinrichtung ein abermaliges Aussenden eines schon anderweitig mehrmals und bisher offenbar vergeblich weitergeleiteten Datentelegrammes nun unterbindet.

Ohne großen apparativen Zusatzaufwand und ohne wesentliche Vergrößerung der Gefahr von Übermittlungsblockaden infolge Selbstkollisionen eröffnet diese erfindungsgemäße Lösung eines selbstbegrenzenden Weiterleitungssystemes eine signifikante Reichweitensteigerung für die Funkübertragungen individueller Datentelegramme von räumlich verteilt betriebenen Messstationen an einen Zielort, insbesondere an einen Zielspeicher. Bei dem kann es sich um einen in der Nähe der Messstationen betriebenen Zwischenspeicher handeln, der von Zeit zu Zeit ausgelesen wird, um die dabei übernommenen akkumulierten Verbrauchs-Messwerte nach Überbringen an eine Abrechnungszentrale anschließend dort auszuwerten; oder die drahtlose Übertragung der Datentelegramme von den einzelnen Messstationen erfolgt - dagegen über um Größenordnungen weitere Distanzen, nämlich über einige hundert bis tausend Meter - direkt an einen Zielspeicher, insbesondere in Form des Zentralspeichers der Abrechnungszentrale.

Die somit erfindungsgemäß mit ungerichtet empfangenden und sendenden Transceivern bestückten und insoweit deshalb auch als Relaisstationen für die Datentelegramme einsetzbaren Messstationen sind also insbesondere mit Speichern für die geographischen Koordinaten ihrer Sende-Standorte ausgestattet. Da diese Standorte nicht mobil sind, werden dafür keine GPS-Empfänger in den einzelnen Messstationen benötigt; es genügt, bei der stationären Installation diesen Standort der jeweiligen Messstation einmal zu ermitteln und dessen geographischen Koordinaten ihr einzuspeichern. Dabei brauchen nicht einmal die vollständigen geographischen Koordinaten abgespeichert zu werden. Denn da auf der Erdoberfläche eine Breitenminute einer Strecke von ca. 1,85 km entspricht, und in Mitteleuropa eine Längenminute im Mittel einer Strecke von ca. 1,25 km, genügt für die Standortbestimmung im Erfassungsbereich des Funkübertragungssystemes das Abspeichern und dann ein späteres Vergleichen schon der Bogenminuten samt der Bogensekunden der Messstations- und Ziel-Standorte. Das entlastet die Messstation bei aufeinanderfolgenden Positionsvergleichsberechnungen gegenüber der Berechnung mit kompletten Ortskoordinatensätzen.

Die Datenblocks der Datentelegramme mit den binärkodierten Messwerten der einzelnen Messstationen werden jeweils um deren absendende Sendeort-Koordinaten ergänzt; zudem enthalten die Datentelegramme die Empfangs-Koordinaten des Zieles für die Messwerte im Datentelegramm. Andere für potentielle Relaisfunktionen mit Transceivern ausgestattete und momentan empfangsbereite Messstationen, die ein solches mit Herkunfts- und mit Ziel-Koordinaten ausgestattetes Datentelegramm empfangen, stellen jede für sich im Wege trigonometrischen Vergleiches jener Koordinaten mit ihren eigenen Standort-Koordinaten fest, ob sie in einer trigonometrisch günstigen Position zwischen dem Sende-Standort des gerade empfangenen und eventuell weiterzuleitenden Datentelegrammes und dem Zielort positioniert sind. In diesem Falle wirkt diese Messstation als Relaisstation, denn sie sendet dieses aktuell von einer anderen Messstation empfangene Datentelegramm geringfügig zeitversetzt wieder aus, aber nun mit Angabe der eigenen Senderstandort-Koordinaten. Die ohnehin vorhandene Messstation wirkt so zusätzlich als Relaisstation für ein empfangenes fremdes Datentelegramm, während sie gerade kein eigenes Datentelegramm abzusenden hat.

Als günstig kann für das Ergebnis des Koordinatenvergleiches insbesondere vorgegeben sein, dass eine Messstation als potentielle Relaisposition in der Umgebung einer gedachten Sichtlinie von der Messstation, die das aktuell aufgenommene Datentelegramm gesendet hatte, zur Zielposition liegt; und das möglichst um etwa die maximale Übertragungsreichweite einer Messstation von der Zielposition entfernt. Denn dann kann die überbrückbare Übertragungsstrecke durch Zwischenschalten der Relaisfunktion dieser anderen Messstation um bis zur Größenordnung der maximalen Entfernung zwischen einer Messstation und der Zielposition, also insgesamt bis zur doppelten Distanz verlängert werden.

In der Praxis wird die tatsächlich überbrückbare Distanz dadurch noch vervielfacht, dass sich bei der Übertragung des Datentelegrammes zur Zielposition nicht nur die erwähnte Messstation als Relaisstation einschaltet, sondern auch von deren Position aus für die Übertragung zunächst die Relaisfunktion von wenigstens einer weiteren nun diesbezüglich günstig positionierten Messstation wirksam wird. Denn jede Relaisfunktion hat die Wirkung eines Datensenders, und dessen Ortskoordinaten überschreiben im Datentelegramm die Ortskoordinaten des vorangehend wirksam gewesenen (Relais-)Senders. Nur die Zielkoordinaten für das Datentelegramm bleiben unverändert beibehalten; und welche Messstation diese Daten ursprünglich generiert hatte, bleibt im Datenblock des Datentelegramms etwa durch eine Identifikationsnummer erhalten.

Bei dagegen trigonometrisch ungünstigen Relaispositionen wird hier das empfangene Datentelegramm ignoriert. Als ungünstige Relaispositionen sind für den Koordinatenvergleich insbesondere vorgegeben, dass die momentan ein Datentelegramm empfangende Messstation relativ dicht bei der dieses Datentelegramm sendenden Messstation oder relativ dicht bei der Zielposition gelegen ist, so dass das Zwischenschalten einer Relaisfunktion kaum noch Vorteile erwarten lässt; oder die potentielle Relaisstation liegt so weit abseits der Verbindungsgeraden zwischen den aktuellen Sende-Koordinaten dieses Datentelegrammes und dessen Ziel-Koordinaten, dass ein kaum Vorteile bietender großer Umweg für die Übertragung des aktuellen Datentelegrammes an etwa einen Zielspeicher einzuschlagen wäre. Ein in der Regel zu vermeidender Umweg wäre es auch, wenn die ansonsten als Relaisstation in Betracht kommende Messstation (aus Sicht des Sendestandortes des Datentelegrammes) hinter der Zielposition liegen würde.

Wenn die Intensität eines vom Transceiver einer Messstation empfangenen Datentelegrammes sehr hoch ist, dann stammt dieses Datentelegramm mit hinreichender Wahrscheinlichkeit von einer nahebei betriebenen Messstation. Dann ist es sinnvoll, dieses Datentelegramm nicht noch zusätzlich, zeitversetzt, über den benachbarten Relais-Transceiver abzusenden, sondern hier gleich zu verwerfen, ohne erst den Koordinatenvergleich zu aktivieren.

Es ist vorteilhaft, in jedem Datentelegramm zu vermerken, wie oft nach der ursprünglichen Generierung es schon von einer als Relais wirkenden Messstation aufgenommen und wieder ausgesandt wurde. Nach einer vorgegebenen Anzahl von wirksam gewordenen Relaisstationen wird eine weitere Übermittlung des Datentelegrammes abgebrochen, damit dieses Datentelegramm nicht weiter herumvagabundiert und schließlich womöglich durch Selbstkollision infolge mehrfach zeitversetzten Aussendens Übertragungsressourcen blockiert.

Zusätzliche Weiterbildungen und Alternativen zur erfindungsgemäßen Lösung ergeben sich aus den weiteren Ansprüchen und, auch hinsichtlich deren Vorteilen, aus nachstehender Beschreibung eines auf das Funktionswesentliche stark abstrahiert und nicht maßstabsgerecht skizzierten bevorzugten Realisierungsbeispieles zur erfindungsgemäßen Lösung. In der Zeichnung zeigt nach Art von funktionalen Blockschaltbildern:
- Fig.1: eine prinzipielle Ausstattung einer Messstation,
- Fig.2: eine prinzipielle Auslegung des Datenblockes eines Datentelegrammes, und
- Fig.3: damit ein exemplarisches Szenario gemäß dem erfindungsgemäßen Funkübertragungssystem mit zusätzlicher Verwendung von Messstationen als potentiellen Relaisstationen.

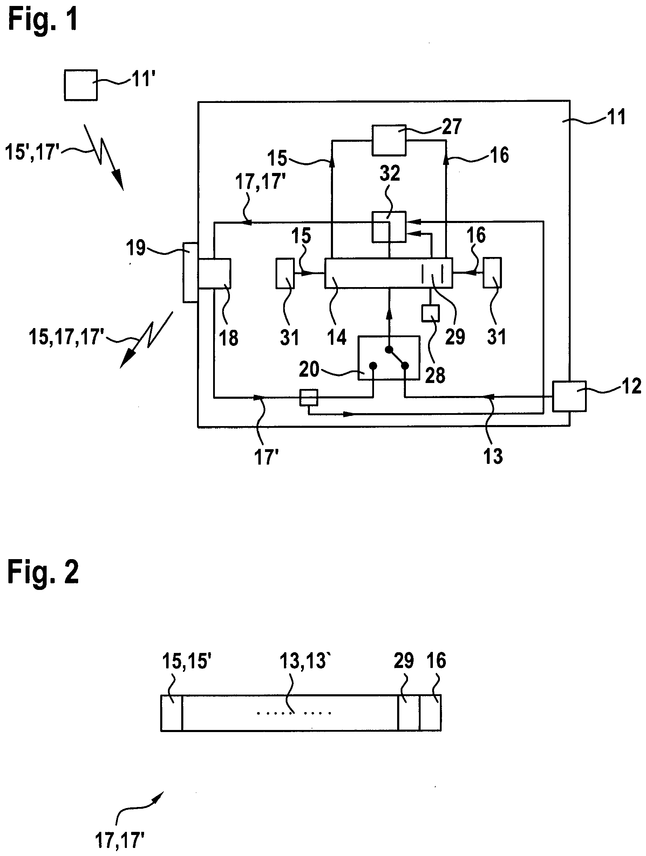

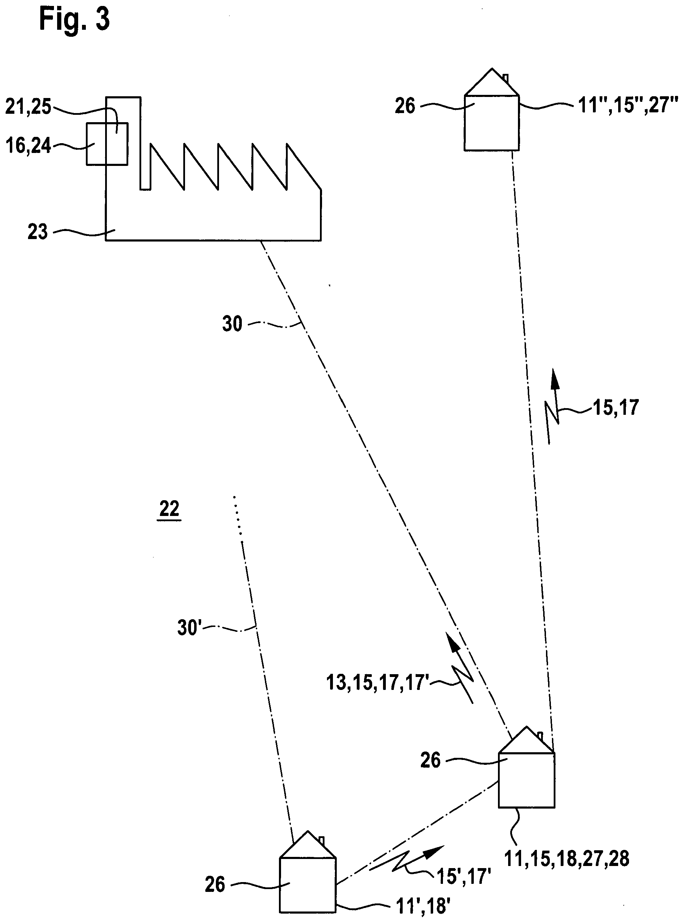

Eine Messstation 11 weist in Zusammenhang mit vorliegender Erfindung wenigstens (Fig.1) ein Messgerät 12 zu periodischem Erfassen eines Messwertes 13 wie einer Wasser-, Gas- oder einer Warmwasser-Rohrdurchflussmenge oder eines Stromverbrauchs zur Verbrauchsabrechnung auf. Der Messwert 13 wird binär kodiert und in ein Register 14 eingeschrieben. Darin wird dieser Datenblock um aus Speichern 31 zur Verfügung gestellte geographische Sendeort-Koordinaten 15 dieser Messstation 11 sowie um die geographischen Zielort-Koordinaten 16 etwa eines Zielspeichers 21 für den Datenblock mit den Messwerten 13 ergänzt. Die Sendeort-Koordinaten 15 wurden bei der lokalen Installation der Messstation 11 etwa GPS-basiert ermittelt und vor Ort eingespeichert. Die Zielort-Koordinaten 16, an denen bei diesem bevorzugten Einsatzfall des erfindungsgemäßen Funkübertragungssystemes 22 ein den Messstationen 11 gemeinsamer Zielspeicher 21 (Fig.3) betrieben wird, sind vorgegeben. Der damit erweiterte Inhalt des Registers 14 wird dann noch um datenverarbeitungstechnische Kennungen wie einen Header ergänzt und, so vervollständigt, als Datentelegramm 17 (Fig.2) über einen Transceiver 18 und seine Antenne 19 (Fig.1) zeitlich unsynchronisiert abgestrahlt. Diese Funkübertragung erfolgt in einem aus dem dafür zugelassenen Frequenzbereich ausgewählten Kanal, etwa im UHF-Spektrum.

In Fig.1 ist durch das Symbol eines Umschalters 20 veranschaulicht, dass die Messstation 11 dann, wenn nicht gerade Messwerte 13 aufzunehmen und zum abzusendenden Datentelegramm 17 zu verarbeiten sind, für ihre Relaisfunktion über den Transceiver 18 auf Empfangsbereitschaft für ein etwa aufnehmbares Telegramm 17' von einer anderen Messstation 11'schaltet. Bei Empfang eines solchen Datentelegrammes 17' wird damit der aktuelle Inhalt des Registers 14 überschrieben; wobei im daraufhin zeitverzögert wieder auszusendenden Telegramm 17' zwar die Zielspeicher-Koordinaten 16 für dieses Datentelegramm 17' unverändert bleiben, aber die beim Empfang enthaltenen Sendeort-Koordinaten 15' der Herkunfts-Messstation 11' durch die aktuellen Standort-Koordinaten 15 der nun sendenden Messstation 11 ersetzt sind. So steht die momentan kein eigenes Datentelegramm 17 sendende Messstation 11 als Relaisstation zur Verfügung für ein von einer anderen Messstation 11', auf dem Wege zu den für alle Datentelegramme 17, 17' geltenden Ziel-Koordinaten 16, empfangenes Datentelegramm 17'.

Messstationen 11 mit ihren Messgeräten 12 können in den Wohnungen einer Wohnanlage installiert sein und ihre periodisch, etwa viertelstündlich, erfassten Verbrauchs-Messwerte 13 an einen Zielspeicher 21 (Fig.3) übermitteln. Bei dem kann es sich um einen Abrechnungsspeicher handeln, aus dem zum Ende einer Abrechnungsperiode, etwa einmal im Kalenderjahr, der akkumulierte Verbrauch ausgelesen und in eine Verbrauchsrechnung umgesetzt wird; oder es handelt sich um einen Zwischenspeicher, der mit der Antenne 24 seiner Empfangseinrichtung 25 etwa in einem Kellervorraum der Wohnanlage installiert ist und der dann seinerseits am Ende einer Abrechnungsperiode zum Datentransfer in einen zentral betriebenen Abrechnungsspeicher ausgelesen wird.

Vorrangig ist das erfindungsgemäß ausgelegte Funkübertragungssystem 22 mit den als Relaisstationen einsetzbaren Messstationen 11 aber nicht für Gebäude-Innenanwendungen, sondern für Freifeldeinsatz mit Übertragungsstrecken in der Größenordnung mehrerer hundert Metern (typisch von etwa 300 bis 3000 Metern) konzipiert. Szenario für einen solchen Einsatz ist insbesondere eine weiträumig aufgelockerte Eigenheimbebauung eines Siedlungsgebietes mit Anschluss an einen örtlichen, etwa kommunalen, Versorgungsbetrieb 23. Bei dem ist an exponierter Stelle, bei deren bekannten geographischen Ziel-Koordinaten 16, wie etwa am Abgasschornstein, die Antenne 24 für eine Empfangseinrichtung 25, hier für einen Zielspeicher 21, installiert.

An den Versorgungsbetrieb 23 angeschlossene Gebäude 26 des Siedlungsgebietes mit den ihrerseits bekannten Sendeort-Koordinaten 15 sind mit den Messstationen 11 ausgestattet. Deren Messwerte 13 werden im Rahmen der beschriebenen Datentelegramme 17 über Transceiver 18 jeweils ungerichtet abgestrahlt und dabei auch in Richtung auf den Zielspeicher 21 zu übermittelt. In den verbleibenden, größeren Zeitspannen sind (wie durch den Unschalter 20 in Fig.1 zum Ausdruck gebracht) die Messstationen 11, 11', 11", ... auf ungerichteter Empfangsbereitschaft ihrer Transceiver 18, 18', 18", ... für ein zufällig aufnehmbares Datentelegramm 17, 17', 17", ... geschaltet, das vom Transceiver 18, 18', 18", ... einer anderen der Messstationen 11, 11', 11", ... rundum ausgesendet wurde.

Eine solche, andere Messstation 11' mag so weit von dem Zielspeicher 21 entfernt betrieben sein, dass aufgrund der Entfernung oder aufgrund von Ausbreitungshindernisessen oder anderen Störgegebenheiten eine direkte Funkübertragung von der Messstation 11' längs der Sichtlinie 30' an den Zielspeicher 21 unsicher oder gar unmöglich ist. Ein Koordinatenvergleicher 27 in der nun empfangenden Messstation 11 mag aber feststellen, dass diese noch relativ günstig zwischen der sendenden Messstation 11' und dem Zielspeicher 21 positioniert ist; weshalb die empfangende Messstation 11 nun als Relais für die Weiterleitung des empfangenen Datentelegrammes 17' wirkt. Deshalb wird dieses von der Messstation 11 ungerichtet, rundum ausgesendete Datentelegramm 17' über die Relaisstation zuverlässig auch beim Zielspeicher 21 empfangen.

Auf die gleiche Weise kann das Datentelegramm 17', stattdessen oder zeitversetzt parallel dazu, über die Relaisfunktion wenigstens einer weiteren Messstation 11 zum Zielspeicher 21 gelangen (in Fig.3 nicht berücksichtigt). Um dort eine gegenseitige Blockade zeitversetzter aber inhaltsgleicher Datentelegramme 17, 17' zu vermeiden, und um schon zuvor Kollisionen aufgrund Kanalüberbelegungen durch auf verschiedenen Wegen eingehende übereinstimmende Datentelegramme 17, 17' zu vermeiden, wird zweckmäßigerweise jede Relaisfunktions-Weiterleitung in einer Messstation 11 in einer Zählstelle 29 im Datentelegramm 17' festgehalten. Deren Inhalt wird, etwa ausgelöst durch die Aktualisierung der aktuellen Sendeort-Koordinaten 15' im Register 14, von einer Zähleinrichtung 28 um einen Zählschritt erhöht; und bei Erreichen einer vorgegebenen Anzahl von Relais-Wiederholungen wird eine abermalige Weitersendung über eine Blockierschaltung 32 gestoppt.

Wenn aber eine ein Datentelegramm 17 empfangende Messstation 11" etwa so weit außerhalb der direkten Sichtlinie 30 zwischen einer originär sendenden Messstation 11 und dem Zielspeicher 21 liegt, dass deren Funktion als Relaisstation eine kritische Verlängerung des Übertragungsweges für das Datentelegramm 17-17' bedeuten würde, dann verhindert deren Koordinatenvergleicher 27" über die Blockierschaltung 32 eine Weiterleitung als Datentelegramm 17". Die im Datentelegramm 17" enthaltene Information geht jedoch nicht verloren, insoweit wenigstens eine andere der zahlreichen, räumlich verteilten Messstationen 11 das Datentelegramm 17' empfangen und als Relaisstation wirkend, gegebenenfalls über weitere Messstationen 11, zum Zielort übermittelt hat.

Eine erhebliche selbstbegrenzende Erweiterung der Systemausdehnung etwa hinsichtlich Erfassens verbrauchsabhängiger Messwerte 13 lässt sich also erfindungsgemäß mit Messstationen 11 erzielen, die für Relaisfunktionen mit Transceivern 18 für ungerichtetes Senden und Empfangen von Messwerte 13 enthaltenden Datentelegrammen 17 ausgestattet sind, sowie mit Speichern 31 für die Sendeort-Koordinaten 15 der jeweiligen Messstation 11 und für die Koordinaten 16 eines Zielortes wie eines Zielspeichers 21. Ebenso wie selbst generierte Datentelegramme 17 werden über einen Transceiver 18 ungerichtet aufgenommene Datentelegramme 17' von anderen Messstationen 11' über den Transceiver 18 ungerichtet wieder ausgesandt, sofern nicht eine Blockierschaltung 32 aktiviert ist. Dieses kann ein Koordinatenvergleicher 27 veranlassen, wenn die andernfalls weiterleitende Messstation 11 sich in einer übertragungstechnisch ungünstigen Position bezüglich der trigonometrischen Zuordnung zwischen der gerade das Datentelegramm 17' sendenden Messstation 11' und dem Zielort 21 befindet. Ohne erst den Koordinatenvergleicher 27 in Funktion setzen zu müssen, kann die Blockierschaltung 32 auch von einer Intensitätsmesseinrichtung für in der Messstation 11 empfangene und ansonsten wieder auszusendende Datentelegramme 17' aktiviert werden, wenn diese mit besonders hohen oder mit besonders niedrigen Pegeln empfangen werden. Schließlich kann auch vorgesehen sein, die Blockierschaltung 32 durch eine Zähleinrichtung 28 zu aktivieren, nämlich wenn ein Datentelegramm 17' schon mehrmals von den Transceivern 18 irgendwelcher der Messstationen 11, 11' empfangen und wieder ungerichtet ausgesandt wurde. Die mit solchen Einschränkungen erfolgende Funksignal-Weiterleitung wird ohne zusätzlichen Installationsaufwand mit den ohnehin installierten und nun zusätzlich als Relaisstationen wirkenden Messstationen 11 des lokalisierten Funkübertragungssystemes 22 realisiert, wobei eine Entscheidung über aktives Weiterleiten eines mit durchschnittlichen Pegeln von einer anderen Messstation 11' empfangenen Datentelegrammes 17' in erster Linie von den aktuellen Sende-, Empfangs- und Ziel-Koordinaten 15', 15 beziehungsweise 16 abhängig gemacht wird.

Vorteilhaft einsetzbar ist ein derartiges Funkübertragungssystem 22 insbesondere beispielsweise für Messwerterfassung in großflächigen Versorgungsgebieten wie an ein lokales Fernheizkraftwerk angeschlossenen Gebäuden 26. So können in der Größenordnung von 4000 Gebäuden 26 mit ihren Messstationen 11 im Umkreis von bis zu 3000 Metern Radius um den mit der Empfangseinrichtung 25 für einen Zielspeicher 21 ausgestatteten Versorgungsbetrieb 23 herum an diesen angeschlossen sein. Diese senden jede stochastisch und ungerichtet etwa alle 10 Sekunden über jeweils ca. 10 Millisekunden Dauer ein Datentelegramm 17 von typisch 100 Byte Länge, das möglicherweise direkt von der Empfangseinrichtung 25, jedenfalls aber von einigen der umgebenden Messstationen 11 mit der beschriebenen Wirkung von Relaisstationen aufgenommen und als Datentelegramm 17' mit aktualisierten Sende-Koordinaten 15 weitergesendet wird, wenn es nicht stattdessen zur Bereinigung wegen örtlicher oder funktechnischer Gegebenheiten gelöscht wird.

### Bezugszeichenliste

- 11: (Mess-)Station (in 26)
- 12: (Mess-)Gerät (in 11)
- 13: (Mess-)Wert (in 17)
- 14: Register (für 17)
- 15: Sendeort-Koordinaten (von 11, 11')
- 16: Ziel-Koordinaten (von 21)
- 17: Datentelegramme (17, 17'; an 21)
- 18: Transceiver (bei 11)
- 19: Antenne (von 18)
- 20: Umschalter (für 13/17-17')
- 21: Zielort, beispielsweise Zielspeicher (bei 23, für 17, 17')
- 22: Funkübertragungssystem (11' über 11 nach 21)
- 23: Versorgungsbetrieb (mit 21)
- 24: Antenne (für 25)
- 25: Empfangseinrichtung (bei 23)
- 26: Gebäude (mit 11; im Umfeld von 23)
- 27: Koordinatenvergleicher (15-16; zum Ansteuern von 32))
- 28: Zähleinrichtung (für 29)
- 29: Zählstelle (in 17; zum Ansteuern von 32)
- 30: Sichtlinie (der Übermittlung von 17 an 21)
- 31: Speicher (in 11 für 15 beziehungsweise 16)
- 32: Blockierschaltung (in 11, gegen Absenden des 17')

## Patentansprüche

1. Verfahren zur Übertragung von Datentelegrammen (17) innerhalb eines Funkübertragungssystems mit verteilten, ortsfesten, jeweils ein Messgerät (12) und einen Transceiver (18) für ungerichtetes Senden und Empfangen von Datentelegrammen (17, 17') aufweisenden Messstationen (11) und mit einem Zielort (21), **dadurch gekennzeichnet, dass** von einer der Messstationen (11) von einer anderen Messstation (11') mit deren geographischen Sendeort-Koordinaten (15') ausgesandte Datentelegramme (17') empfangen und unter Austausch der geographischen Sendeort-Koordinaten (15) im Datentelegramm (17') wieder abgestrahlt werden, wobei das Wieder-Abstrahlen eines in der Messstation (11) von der anderen Messstation (11') gerade empfangenen Datentelegramms (17') von einem Koordinatenvergleicher (27) unterbunden wird, wenn von den aktuellen geographischen Sendeort-Koordinaten (15) zu den geographischen Ziel-Koordinaten (16) des Zielortes (21) ungünstigere Übertragungsverhältnisse zu erwarten sind als von den geographischen Sendeort-Koordinaten (15') der anderen Messstation (11').

2. Verfahren nach Anspruch 1, **dadurch gekennzeichnet, dass** das Wieder-Abstrahlen eines in der Messstation (11) von der anderen Messstation (11') gerade empfangenen Datentelegramms (17') von einer Intensitätsmesseinrichtung zur Beurteilung der Stärke jenes Datentelegramms (17') unterbunden wird, wenn es besonders starke oder besonders schwache Pegel aufweist.

3. Verfahren nach einem der beiden vorangehenden Ansprüche, **dadurch gekennzeichnet, dass** das Wieder-Abstrahlen eines in der Messstation (11) von der anderen Messstation (11') gerade empfangenen Datentelegramms (17') von einer Zähleinrichtung (28) unterbunden wird, wenn es bereits mehrmals von Messstationen (11, 11") empfangen und wieder ausgesandt wurde.

4. Funkübertragungssystem (22) zur Durchführung des Verfahrens nach einem der vorangehenden Ansprüche für Daten von verteilten, ortsfesten Messstationen (11) mit Messgeräten (12) an einen Zielort (21), **dadurch gekennzeichnet, dass** Messstationen (11)mit Transceivern (18) für ungerichtetes Senden und Empfangen von Datentelegrammen (17) mit in den Messstationen (11) generierten sowie mit von den Messstationen (11) empfangenen und wieder ausgesandten Werten (13) samt deren geographischen Sendeort-Koordinaten (15) und Ziel-Koordinaten (16) ausgestattet sind, und dass eine Blockierschaltung (32) gegen erneutes Aussenden eines empfangenen Datentelegrammes (17') eingesetzt ist.

5. Funkübertragungssystem nach dem vorangehenden Anspruch, **dadurch gekennzeichnet, dass** die Messstationen (11) auch mit einer, die Blockierschaltung (32) gegen erneutes Aussenden eines empfangenen Datentelegrammes (17') aktivierenden, Intensitätsmesseinrichtung für empfangene Datentelegramme (17') ausgestattet sind.

6. Funkübertragungssystem nach einem der beiden vorangehenden Ansprüche, **dadurch gekennzeichnet, dass** die Messstationen (11) auch mit einer, die Blockierschaltung (32) gegen erneutes Aussenden eines empfangenen Datentelegrammes (17') aktivierenden, Zähleinrichtung (28) für vorausgegangene Aussendungen eines empfangenen Datentelegrammes (17') ausgestattet sind.

7. Funkübertragungssystem nach einem der drei vorangehenden Ansprüche, **dadurch gekennzeichnet, dass** die Messstationen (11) mit der Funktion eines Umschalters (20) ausgestattet sind für Aufnahme weiterzuversendender Datentelegramme (17'), sofern nicht gerade ein abzustrahlendes Datentelegramm (17) mit eigenen Messwerten (13) zu bearbeiten ist.

8. Funkübertragungssystem nach einem der vier vorangehenden Ansprüche, **dadurch gekennzeichnet, dass** sein Zielspeicher (21) samt Empfangseinrichtung (25) und Antenne (24) am Zielort (21) bei einem Versorgungsbetrieb (23) installiert ist, an das, mit den Messstationen (11) samt ihren Transceivern (18) ausgestattete, Gebäude (26) eines Siedlungsgebietes angeschlossen sind.

## Claims

1. Method for transmitting data telegrams (17) within a radio transmission system having distributed, fixed-location metering stations (11) that each have a meter (12) and a transceiver (18) for nondirectional sending and receiving of data telegrams (17, 17') and having a destination (21), **characterized in that** one of the metering stations (11) receives data telegrams (17') transmitted by another metering station (11') with the geographical sending location coordinates (15') thereof, and said data telegrams are re-emitted with interchange of the geographical sending location coordinates (15) in the data telegram (17'), wherein the re-emission of a data telegram (17') just received in the metering station (11) from the other metering station (11') is prevented by a coordinate comparator (27) when less favourable transmission conditions can be expected from the current geographical sending location coordinates (15) to the geographical destination coordinates (16) of the destination (21) than from the geographical sending location coordinates (15') of the other metering station (11').

2. Method according to Claim 1, **characterized in that** the re-emission of a data telegram (17') just received in the metering station (11) from the other metering station (11') is prevented by an intensity measuring device for assessing the strength of that data telegram (17') when it has particularly strong or particularly weak levels.

3. Method according to either of the two preceding claims, **characterized in that** the re-emission of a data telegram (17') just received in the metering station (11) from the other metering station (11') is prevented by a counting device (28) when it has already been received and retransmitted by metering stations (11, 11") repeatedly.

4. Radio transmission system (22) for performing the method according to one of the preceding claims for data from distributed, fixed-location metering stations (11) having meters (12) to a destination (21), **characterized in that** metering stations (11) are equipped with transceivers (18) for nondirectional sending and receiving of data telegrams (17) with values (13) generated in the metering stations (11) and with values (13) received and retransmitted by the metering stations (11), along with the geographical sending location coordinates (15) and destination coordinates (16) thereof, and **in that** a blocking circuit (32) is used against fresh transmission of a received data telegram (17').

5. Radio transmission system according to the preceding claim, **characterized in that** the metering stations (11) are also equipped with an intensity measuring device for received data telegrams (17') that activates the blocking circuit (32) against fresh transmission of a received data telegram (17').

6. Radio transmission system according to either of the two preceding claims, **characterized in that** the metering stations (11) are also equipped with a counting device (28) for preceding transmissions of a received data telegram (17') that activates the blocking circuit (32) against fresh transmission of a received data telegram (17').

7. Radio transmission system according to one of the three preceding claims, **characterized in that** the metering stations (11) are equipped with the function of a changeover switch (20) for the purpose of receiving data telegrams (17') for forwarding, provided that a data telegram (17) for emission having its own measured values (13) does not currently need to be handled.

8. Radio transmission system according to one of the four preceding claims, **characterized in that** its destination memory (21) is installed along with a reception device (25) and an antenna (24) at the destination (21) in the case of a public utility (23), to which radio transmission system buildings (26) in an inhabited area that are equipped with the metering stations (11) along with their transceivers (18) are connected.

## Revendications

1. Procédé de transmission de télégrammes de données (17) au sein d'un système de transmission radio comportant des stations de mesure (11) réparties et fixes, comprenant respectivement un appareil de mesure (12) et un émetteur-récepteur (18) pour l'émission et la réception omnidirectionnelles de télégrammes de données (17, 17') et ayant une destination (21), **caractérisé en ce que** des télégrammes de données (17') émis par l'une des stations de mesure (11) sont reçus par une autre station de mesure (11') avec leurs coordonnées géographiques de destination (15') et sont réémises par échange des coordonnées géographiques de destination (15) dans le télégramme de données (17'), dans lequel la rémission d'un télégramme de données (17') déjà reçu par l'autre station de mesure (11') est empêchée dans la station de mesure (11) par un comparateur de coordonnées (27) lorsqu'on peut s'attendre à des rapports de transmission des coordonnées géographiques de destination (15) actuelles aux coordonnées géographiques cibles (16) de la destination (21) moins favorables que depuis les coordonnées géographiques de destination (15') de l'autre station de mesure (11').

2. Procédé selon la revendication 1, **caractérisé en ce que** la rémission d'un télégramme de données (17') déjà reçu par l'autre station de mesure (11') est empêchée dans la station de mesure (11) par un dispositif de mesure d'intensité destiné à évaluer l'intensité dudit télégramme de données (17') lorsqu'il présente un niveau particulièrement élevé ou particulièrement faible.

3. Procédé selon l'une quelconque des revendications précédentes, **caractérisé en ce que** la rémission d'un télégramme de données (17') déjà reçu par l'autre station de mesure (11') est empêchée dans la station de mesure (11) par un dispositif de comptage (28) lorsqu'il a déjà été reçu et réémis plusieurs fois par des stations de mesure (11, 11").

4. Système de transmission radio (22) destiné à mettre en oeuvre le procédé selon l'une quelconque des revendications précédentes pour des données de stations de mesure (11) réparties et fixes comportant des appareils de mesure (12) au niveau d'une destination (21), **caractérisé en ce que** des stations de mesure (11) dotées d'émetteurs-récepteurs (18) sont configurées pour l'émission et la réception omnidirectionnelles de télégrammes de données (17) ayant des valeurs (13) générées dans les stations de mesure (11), reçues par les stations de mesure (11) et réémises en association avec leurs coordonnées géographiques de destination (15) et les coordonnées cibles (16), et **en ce qu'**un circuit de blocage (32) est mis en oeuvre pour empêcher une nouvelle émission d'un télégramme de données (17') reçu.

5. Système de transmission radio selon l'une quelconque des revendications précédentes, **caractérisé en ce que** les stations de mesure (11) sont également équipées d'un dispositif de mesure d'intensité des télégrammes de données (17') reçus activant le circuit de blocage (32) pour empêcher une nouvelle émission d'un télégramme de données (17') reçu.

6. Système de transmission radio selon l'une des deux revendications précédentes, **caractérisé en ce que** les stations de mesure (11) sont également équipées d'un dispositif de comptage (28) d'émissions précédentes d'un télégramme de données (17') reçu, activant le circuit de blocage (32) pour empêcher une nouvelle émission d'un télégramme de données (17') reçu.

7. Système de transmission radio selon l'une quelconque des trois revendications précédentes, **caractérisé en ce que** les stations de mesure (11) sont dotées de la fonction d'un commutateur (20) destiné à acquérir des télégrammes de données (17') devant être réémis, dans la mesure où un télégramme de données (17) devant être émis ne doit pas déjà être traité avec des valeurs de mesure appropriées (13).

8. Système de transmission radio selon l'une quelconque des quatre revendications précédentes, **caractérisé en ce qu'**une mémoire de destination (21) est installée en association avec un dispositif de réception (25) et une antenne (24) au niveau de la destination (21) dans le cas d'un fonctionnement alimenté (23), à laquelle sont connectés des bâtiments (26) d'une agglomération équipés des stations de mesure (11) en association avec leurs émetteurs-récepteurs (18).
